# EUROPÄISCHE PATENTANMELDUNG

(11) **EP 1 059 178 A2**
(43) Veröffentlichungstag der Anmeldung: **13.12.2000**
(21) Anmeldenummer: 00111128.5
(22) Anmeldetag: 24.05.2000
(51) Int. Cl.: B60H 1/00, B60H 1/34

(54) **Luftleitvorrichtung**

(30) Priorität: 11.06.1999 DE 29910199 U; 07.10.1999 DE 29917713 U
(71) Anmelder: Utescheny - Endos GmbH, D-75059 Zaisenhausen (DE)
(72) Erfinder: Bauer, Thomas, 75056 Sulzfeld (DE); Megow, Gerd, 75031 Eppingen-Elsenz (DE); Ries, Jürgen, 76703 Kraichtal (DE); Soldinger, Dirk, 76327 Pfinztal (DE)
(74) Vertreter: Clemens, Gerhard, Dr.-Ing.

(57) **Zusammenfassung**

Eine Luftleitvorrichtung (10.1) zum richtungsmäßig definierten Einleiten (R) von auf der Rückseite (20) der Vorrichtung zugeführter Luft (L) in einen Raum (22), insbesondere Innenraum eines Fahrzeugs, mit einem Gehäuse (26), einer vorderseitig Ausnehmungen (14) aufweisenden Luftleiteinrichtung (12.1), mittels derer die Richtung (R) der in den Raum (22) ausströmenden Luft festlegbar ist, Mitteln (16) zum Einstellen der Richtung (R) der Luftleiteinrichtung (12.1) und Mitteln (18) zum Einstellen der Menge der in den Raum (22) strömenden Luft, zeichnet sich dadurch aus, dass ein Luftleitkörper (30.1) oder eine Luftleitplatte vorhanden ist, der/die durchgehende Ausnehmungen (32) aufweist, die mit den vorderseitigen Ausnehmungen (14) und der luftbeaufschlagten Rückseite (20) korrespondieren, der Luftleitkörper (30.1) oder die Luftleitplatte aus elastisch verformbarem Material besteht, Mittel (40) zum Verschieben der Rückseite des/der Luftleitkörpers (30.1)/Luftleitplatte gegenüber der fixierten Vorderseite des/der Luftleitkörpers (30.1)/Luftleitplatte vorhanden sind oder umgekehrt und die Mittel (40) zum Verschieben von den Mitteln (16) zum Einstellen der Richtung beaufschlagt werden, so dass sich eine gewünschte Stellung der durchgehenden Ausnehmungen (32) und damit die gewünschte Einströmrichtung (R) einstellt.

## Beschreibung

### TECHNISCHES GEBIET

Die vorliegende Erfindung betrifft eine Luftleitvorrichtung zum richtungsmäßig definierten Einleiten von auf der Rückseite der Vorrichtung zugeführter Luft in einen Raum, insbesondere Innenraum eines Fahrzeugs, mit einem Gehäuse, einer vorderseitig Ausnehmungen aufweisenden Luftleiteinrichtung, mittels derer die Richtung der in den Raum ausströmenden Luft festlegbar ist, Mitteln zum Einstellen der Richtung der Luftleiteinrichtung und Mitteln zum Einstellen der Menge der in den Raum strömenden Luft.

Derartige Luftleitvorrichtungen werden in großer Stückzahl im Innenraum von Kraftfahrzeugen zur Steuerung der Luftströmung (Richtung und Masse) eingesetzt.

### STAND DER TECHNIK

Es sind Luftleitvorrichtung bekannt, die zur Steuerung der Luftströmungsrichtung sogenannte Lamellen-beziehungsweise Walzenausströmer besitzen. Hierbei werden sichtbare und schwenkbare Horizontal- und Vertikal-Lamellen über eine Mechanik unter manueller Betätigung nach "oben/unten" beziehungsweise nach "links/rechts" geschwenkt und somit die Luftströmung gesteuert. Die Menge der austretenden Luft wird hierbei manuell über ein Handrad eingestellt, das auf die Stellung einer im Zuführungskanal der Luft angeordneten schwenkbaren Klappe einwirkt. Durch diese "offene Bauweise" wird die Optik beziehungsweise das Design des Armaturenbretts eines Kraftfahrzeugs gestört. Die Luftleitvorrichtung wirkt wie ein Fremdkörper. Darüber hinaus neigen die Horizontal- und Vertikal-Lamellen zur Verschmutzung durch Staubansammlung in den Eckbereichen, die zu Reinigungszwecken nur schwer zugänglich sind.

### DARSTELLUNG DER ERFINDUNG

Der vorliegenden Erfindung liegt die Aufgabe beziehungsweise das technische Problem zugrunde, eine Luftleitvorrichtung der eingangs genannten Art anzugeben, die eine einfache und dauerhaft zuverlässige Einstellung der Luftströmungsrichtung gewährleistet, die eine wirtschaftliche Herstellung und Montage und die Umsetzung höchster designerischer Ansprüche ermöglicht.

Die erfindungsgemäße Luftleitvorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Luftleitvorrichtung zeichnet sich demgemäß dadurch aus, dass ein Luftleitkörper oder eine Luftleitplatte vorhanden ist, der/die durchgehende Ausnehmungen aufweist, die mit den vorderseitigen Ausnehmungen und der luftbeaufschlagten Rückseite korrespondieren, der Luftleitkörper oder die Luftleitplatte aus elastisch verformbarem Material besteht, Mittel zum Verschieben der Rückseite des/der Luftleitkörpers/Luftleitplatte gegenüber der fixierten Vorderseite des/der Luftleitkörpers/Luftleitplatte vorhanden sind und die Mittel zum Verschieben von den Mitteln zum Einstellen der Richtung beaufschlagt werden, so dass sich eine gewünschte Stellung der durchgehenden Ausnehmungen und damit die gewünschte Einströmrichtung einstellt.

Eine besonders bevorzugte Ausgestaltung zeichnet sich dadurch aus, dass die Luftleiteinrichtung als Sandwich-Einrichtung ausgebildet ist mit einer vorderseitig angeordneten starren Lochblende mit Ausnehmungen, einer rückseitig angeordneten Verschiebeplatte mit Ausnehmungen, wobei der Luftleitkörper oder die Luftleitplatte zwischen Lochblende und Verschiebeplatte angeordnet und mit der Lochblende und der Verschiebeplatte verbunden ist, derart, dass die Ausnehmungen und die durchgehenden Ausnehmungen korrespondieren, und die Mittel zum Verschieben auf die Verschiebeplatte einwirken.

Erfindungsgemäß werden die Lamellen durch ein neues Luftleitungssystem ersetzt. Bei Verwendung einer bevorzugt vorgeschlagenen Lochblende verschwindet die "offene Bauweise" mit den genannten Nachteilen. Erfindungsgemäß befindet sich hinter der Lochblende ein flexibler Luftleitkörper beziehungsweise eine flexible Luftleitplatte, der/die elastisch verformbar ist. Dadurch kann die Luftströmung praktisch in jede gewünschte und für den Fahrzeuginnenraum sinnvolle Richtung gelenkt werden.

Die Lochblende, der Luftleitkörper und die Verschiebeplatte sind erfindungsgemäß in der Art eines Sandwich miteinander verbunden, was eine dauerhaft zuverlässige Funktion gewährleistet und eine einfache und wirtschaftliche Herstellung ermöglicht. Die Verschiebeplatte, die mit den Mitteln zum Verschieben und diese wiederum, die mit den Mitteln zum Einstellen in Wirkverbindung stehen, stellt letztendlich die Luftströmungsrichtung ein.

Um eine dauerhaft zuverlässige Funktion zu gewährleisten, zeichnet sich eine besonders vorteilhafte Ausgestaltung dadurch aus, dass die Verschiebeplatte in Führungen in ihrer Ebene verschieblich gelagert ist.

Als Material für die Lochblende kann gemäß einem Ausführungsbeispiel Aluminium und als Material für die Verschiebeplatte kann beispielsweise eine gespritzte Kunststoffplatte eingesetzt werden. Eine montagetechnisch besonders einfache Lösung zeichnet sich dadurch aus, dass die Verbindung zwischen dem Luftleitkörper beziehungsweise der Luftleitplatte und der Lochblende und oder der Verschiebeplatte geklebt ausgebildet ist.

Eine Ausgestaltung, die sehr gute Strömungseigenschaften aufweist, zeichnet sich dadurch aus, dass die vorderen Ausnehmungen, die durchgehenden Ausnehmungen und die rückseitigen Ausnehmungen eine kreisförmige Innenkontur aufweisen, wobei in einer besonders bevorzugten Ausführungsform der Durchmesser der Ausnehmungen im Bereich von 2 mm (Millimeter) bis 5 mm, insbesondere ca. 3 mm, liegt.

Alternativ kann die Innenkontur der Ausnehmungen auch polygonal ausgebildet sein.

Eine besonders bevorzugte Ausführungsform, die die Umsetzung der in der Praxis benötigten Strömungsrichtungen problemlos gewährleistet und darüber hinaus wenig Raumvolumen beansprucht, zeichnet sich dadurch aus, dass die Dicke der Luftleiteinrichtung im Bereich von 10 mm (Millimeter) bis 20 mm, insbesondere von 10 mm, liegt, wobei der Luftleitkörper beziehungsweise die Luftleitplatte bevorzugt eine Dicke von ca. 7 mm (Millimeter) aufweist. Dadurch ist es problemlos möglich, durch Verschiebewege von +/- 3 mm (Millimeter) bis +/- 10 mm, insbesondere von +/- 4 mm, in allen Richtungen in der Ebene der Verschiebeplatte Strömungsrichtungen ausgangsseitig zu erzeugen, die in einem Winkelbereich zur Senkrechten der Ausströmebene im Bereich von ca. 30° (Altgrad) oder mehr liegen.

Gemäß einem besonders bevorzugten Ausführungsbeispiel ist die Verschiebeplatte ca. 1 bis 2 mm (Millimeter) dick, wobei die Verschiebeplatte bevorzugt rückseitig Versteifungsrippen aufweist.

Als Material für den Luftleitkörper beziehungsweise die Luftleitplatte kann beispielsweise Zellgummi, Schaumstoff, thermoplastische Elastomere, Silikon oder dergleichen eingesetzt sein. Der Luftleitkörper kann auch aus einzelnen federnden Kragelementen bestehen, auf deren innerseitigem Endbereich die Verschiebeplatte aufgeklebt ist.

Eine besonders bevorzugte Ausgestaltung, die auch eine wesentliche Neuerung enthält, zeichnet sich dadurch aus, dass die Mittel zum Verschieben elektrische, hydraulische oder pneumatische Aggregate aufweisen. Insbesondere kann das Aggregat als elektrischer Motor ausgebildet sein.

Die Ansteuerung dieses elektrischen Motors kann bevorzugt über Drucktasten, Wippschalter oder dergleichen elektrische Schalter erfolgen.

Eine besonders vorteilhafte alternative Ausgestaltung zeichnet sich dadurch aus, dass die Mittel zum Verschieben elektronisch über ein druckempfindliches Bedienfeld, insbesondere ein sogenanntes Touchscreen oder dergleichen positionsauswertendes elektronisches System angesteuert werden.

Durch den Einsatz von elektrischen beziehungsweise elektronischen Systemen zur Positionierung beziehungsweise Verschiebung der Verschiebeplatte ist es gemäß einer bevorzugten Ausgestaltung möglich, Mittel zum Speichern und Abrufen von voreingestellten beziehungsweise voreinstellbaren Positionen der Mittel zum Verschieben einzusetzen, so dass grundsätzlich eine Memory-Einstellung möglich ist, d.h. das Abrufen und Einstellen von voreingestellten Positionen quasi auf Knopfdruck in einfacher Art und Weise umgesetzt werden kann.

Um den Bedienkomfort zu erhöhen, sind gemäß einer besonders bevorzugten Ausgestaltung hinter dem druckempfindlichen Bedienfeld Leuchtdioden rastermäßig angeordnet, die die jeweils aktuell eingestellte Position und damit die Einblasrichtung optisch sichtbar machen.

Gemäß einer alternativen Ausgestaltung kann gänzlich auf elektrische oder elektronische Bauteile verzichtet werden. Das Verschieben der Verschiebeplatte wird dann bewerkstelligt durch mechanische Elemente, wie beispielsweise die bekannten Bedienräder oder -knöpfe. Bevorzugt kann jedoch auch ein mechanisches Betätigungselement in Form eines Joy-Sticks oder eines Track-Balls oder eines Drehreglers eingesetzt werden. Die jeweilige Position des Joy-Sticks, Track-Balls oder Drehreglers zeigt dann die Einblasrichtung an.

Eine besonders bevorzugte Ausgestaltung zeichnet sich dadurch aus, dass die Verschiebeplatte rückseitig Rippen aufweist. Diese Rippen, die in einem vorgebbaren Raster entsprechend zwischen den Ausnehmungen vorhanden sein können, weisen eine Doppelfunktion auf. Zum einen versteifen sie die Verschiebeplatte und zum anderen dienen sie auch als Luftführungselemente. Die Luft trifft somit nicht auf eine plane Fläche, sondern auf eine Fläche mit Rippen, die gewisse Führungseigenschaften aufweist und unerwünschte Verwirbelungen bewirkt.

Eine alternative Ausgestaltung der erfindungsgemäßen Luftleitvorrichtung zeichnet sich dadurch aus, dass die Ausnehmungen des Luftleitkörpers durch rasterförmig angeordnete Schlaucheinheiten gebildet werden, welche Schlaucheinheiten gemäß einer bevorzugten Ausführungsform als Faltenbälge ausgebildet sind, wobei als Material bevorzugt Gummi eingesetzt wird.

Eine hinsichtlich der Entformungstechnik besonders bevorzugte Ausgestaltung zeichnet sich dadurch aus, dass die Faltenbälge eine gewindeartige Außenkontur aufweisen. Dadurch können beim Entformen die Kerne zunächst durch Drehung entfernt werden und der restliche Entformungsvorgang besteht in einer Zwangsentformung von außen.

Bevorzugt ist der Luftleitkörper als einstückiges Bauteil mit einer Platteneinheit und daran angeformten Faltenbälgen ausgebildet. Dadurch, dass die Faltenbälge eine elastische Nachgiebigkeit aufweisen, kann die beim Verschiebevorgang auftretende vertikale Verformungskomponente problemlos aufgenommen werden. Es sind keine großen Verschiebekräfte erforderlich, was sich besonders vorteilhaft bei einer manuellen Betätigung auswirkt. Insgesamt ist der Luftleitkörper als einstückiges Bauteil mit Platteneinheit und Faltenbälgen kostengünstig in Form eines Spritzteils herstellbar.

Eine besonders bevorzugte dritte Ausführungsform einer erfinderischen Luftleitvorrichtung zeichnet sich dadurch aus, dass der Luftleitkörper durch rasterförmig angeordnete, insbesondere mehr oder minder starre Röhrchen gebildet wird, die frei rotierbar an der Verschiebeplatte und an dem Gehäuse und/oder einer Halteplatte gelagert sind.

Eine konstruktiv besonders einfache Weiterbildung, die unter anderem eine dauerhaft zuverlässige Einsteliverschiebeposition gewährleistet, zeichnet sich dadurch aus, dass zumindest ein Endbereich der Röhrchen jeweils eine teilkugelförmige Außenkontur aufweist und diese Kontur in der Halteplatte und/oder dem Gehäuse nach allen Richtungen drehbar gelagert ist. Hierbei ist eine Ausführungsvariante dadurch gekennzeichnet, dass die Mittel zum Einstellen der Richtung der Lüftungsströmung als am Gehäuse oder der Halteplatte kugelgelagerter Hebel ausgebildet ist, der an die Verschiebeplatte angelenkt ist.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1a: schematische Ansicht eines ersten Ausführungsbeispiels einer Luftleitvorrichtung mit einem Luft-Strömungsbereich und einem Betätigungsbereich mit zwei Betätigungsfeldern,
- Fig. 1b: schematischer Schnitt durch die Luftleitvorrichtung gemäß Fig. 1a, wobei im Luftströmbereich eine Lochblende, eine Verschiebeplatte und ein dazwischen angeordneter Luftleitkörper vorhanden ist und Mittel zum Verschieben der Verschiebeplatte vorhanden sind, die über das Bedienfeld gesteuert werden,
- Fig. 2a, 2b, 2c: schematischer Detailschnitt durch den Luft-Strömungsbereich der Vorrichtung gemäß Fig. 1a und 1b bei unterschiedlicher Verschiebeposition der Verschiebeplatte,
- Fig. 3: schematische Detail-Ansicht eines verschobenen Luftleitkörpers,
- Fig. 4a, 4b, 4c: schematischer Schnitt, Detailschnitt in verschobenem Zustand und Draufsicht eines weiteren Ausführungsbeispiels einer Luftleitvorrichtung mit Faltenbälgen,
- Fig. 5a, 5b, 5c: schematischer Schnitt in unterschiedlichen Verschiebungszuständen eines dritten Ausführungsbeispiels einer Luftleitvorrichtung mit rasterförmig angeordneten, drehbar gelagerten Röhrchen,
- Fig. 6: schematischer Schnitt durch ein Röhrchen des Ausführungsbeispiels gemäß den Fig. 5a bis c,
- Fig. 7a, 7b: schematischer Schnitt und Ansicht eines Gehäuses des Ausführungsbeispiels gemäß den Fig. 5a bis c,
- Fig. 8: schematischer Schnitt und Ansicht einer Halteplatte des Ausführungsbeispiels gemäß den Fig. 5a bis c,
- Fig. 9: schematischer Schnitt und Ansicht eines Führungsschlittens des dritten Ausführungsbeispiels gemäß den Fig. 5a bis c und
- Fig. 10: schematischer Schnitt und Ansicht einer Verschiebeplatte des dritten Ausführungsbeispiels gemäß den Fig. 5a bis c.

### WEGE ZUM AUSFÜHREN DER ERFINDUNG

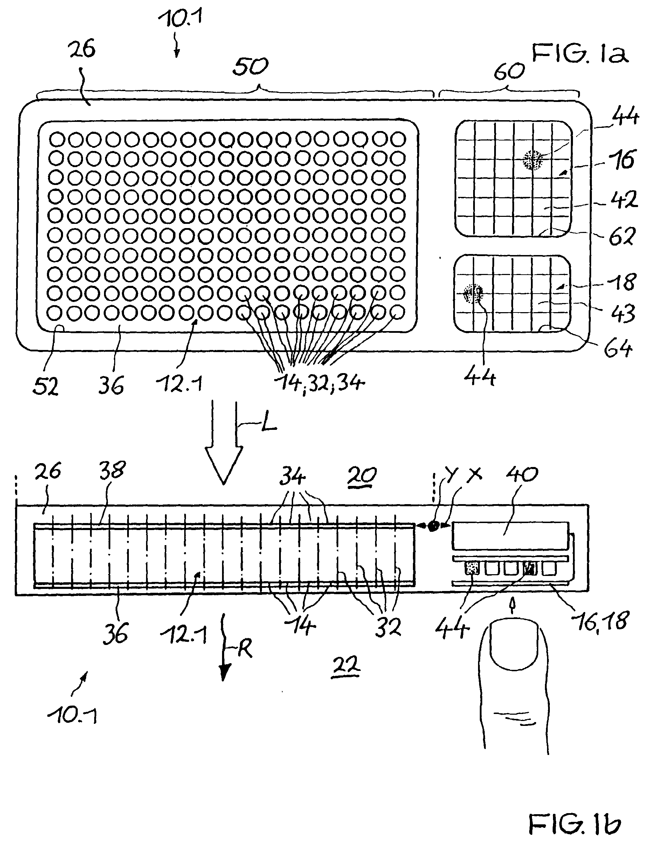

Ein erstes Ausführungsbeispiel einer Luftleitvorrichtung 10.1 für den Innenraum eines Kraftfahrzeuges besitzt gemäß Fig. 1 ein rechtecktörmiges Gehäuse 26, das in Querrichtung gesehen in einen Luft-Strömungsbereich 50 und in einen Betätigungsbereich 60 untergliedert ist. Im LuftStrömungsbereich 50 ist eine rechteckförmige Ausnehmung 52 vorhanden, hinter der eine weiter unten beschriebene Luftleiteinrichtung 12.1 angeordnet ist.

Im Betätigungsbereich 60 sind zwei Bedienfelder 42 beziehungsweise 43 hinter entsprechenden im Gehäuse 26 vorhandenen Ausnehmungen 62 beziehungsweise 64 vorhanden. Die Bedienfelder 42, 43 werden allgemein als Mittel 16 zum Bestimmen der Richtung R (siehe Fig. 1b) der ausströmenden Luft (oberes Bedienfeld 42) und als Mittel 18 zum Bestimmen der austretenden Luftmenge (unteres Bedienfeld 43) bezeichnet.

Die Luftleiteinrichtung 12.1 weist eine Sandwichkontur auf. Vorderseitig ist innerhalb der Ausnehmung 52 des Gehäuses 26 eine Lochblende 36 aus Aluminium mit rasterförmig angeordneten vorderseitigen Ausnehmungen 14 vorhanden. Die Lochblende kann auch aus Kunststoff bestehen. Auf die Lochblende 36 ist rückseitig ein Luftleitkörper 30.1 aufgeklebt, der korrespondierend mit den Ausnehmungen 14 durchgehende Ausnehmungen 32 besitzt. Der Luftleitkörper 30.1 ist aus weichem elastisch verschiebbaren Material, wie beispielsweise Zellgummi, Schaumstoff, weiche thermoplastische Elastomere oder Silikon hergestellt. Auf der Rückseite des Luftleitkörpers 30.1 ist eine steife Verschiebeplatte 38 - ausgebildet als gespritztes Kunststoffteil - aufgeklebt, die ebenfalls rasterförmige angeordnete mit den durchgehenden Ausnehmungen 32 beziehungsweise den vorderseitigen Ausnehmungen 14 korrespondierende, rückseitige Ausnehmungen 34 aufweist. Im Bereich zwischen den Ausnehmungen 34 sind rückseitig an die Verschiebeplatte 38 Versteifungsrippen 46 angeformt.

Die Lochblende 36 ist fest am Gehäuse 26 angeordnet. Aufgrund der elastischen Nachgiebigkeit des Luftleitkörpers 30 ist die Verschiebeplatte 38 gegenüber der Lochblende 36 in ihrer Ebene in einem gewissen Maße verschiebbar, wodurch eine Schrägstellung der durchgehenden Ausnehmungen 32 erzielt wird. Die jeweilige Stellung der durchgehenden Ausnehmungen 32 bestimmt die Einblasrichtung R.

In Fig. 1b ist die Rückseite, von der her die Luftleitvorrichtung 10.1 mit Luft L beaufschlagt wird, mit dem Bezugszeichen 20 angegeben. Der Raum, in den die Luft in Strömungsrichtung R eingeblasen wird, ist in Fig. 1b mit dem Bezugszeichen 22 angegeben.

Wie bereits eingangs erwähnt, ist das in Fig. 1a rechte obere Bedienfeld 42 als Mittel 16 zum Einstellen der Richtung R der Luftströmung ausgebildet. Im dargestellten Ausführungsbeispiel ist das Bedienfeld 42 als druckempfindliches Bedienfeld, d.h. als sogenannter Touchscreen ausgebildet, der mit in Fig. 1b schematisch dargestellten Mitteln 40 zum Verschieben der Verschiebeplatte 38 in Verbindung steht. Die Mittel 40 zum Verschieben der Verschiebeplatte 38 sind im dargestellten Ausführungsbeispiel als Elektromotor ausgebildet, der die Verschiebeplatte 38 in ihrer X- und Y-Ebene innerhalb vorgegebener Grenzen verschieben kann. Der tatsächliche Verschiebeweg wird über das druckempfindliche Bedienfeld gesteuert. In Abhängigkeit der Position, in der auf das Bedienfeld Druck ausgeübt wird (in Fig. 1a als punktierte Kreisfläche dargestellt) werden die Mittel 40 zum Verschieben angesteuert, die wiederum dann die Verschiebeplatte 38 in die entsprechende Position verschieben, so dass sich die vom Bedienfeld 42 eingestellte Positionsrichtung R der auszuströmenden Luft infolge der Schiefstellung der durchgehenden Ausnehmungen 32 einstellt.

Um die jeweils eingestellte Richtung optisch eindeutig anzuzeigen, befinden sich hinter dem (durchsichtigen) Bedienfeld 42 rastermäßig angeordnete Leuchtdioden 44, die die jeweils eingestellte Position anzeigen.

Das unterhalb des Bedienfelds 42 angeordnete Bedienfeld 43 ist ebenfalls als druckempfindliches Bedienfeld ausgebildet und dient allgemein als Mittel 18 zum Einstellen der Menge der austretenden Luft. Diese Mittel 18 stehen mit nicht näher dargestellten Mitteln zum Verdrehen einer nicht näher dargestellten Klappe in Wirkverbindung, wobei die Klappe innerhalb des Luftzuführungskanals von einer Offen- bis hin zu einer Schließ-Stellung geklappt werden kann.

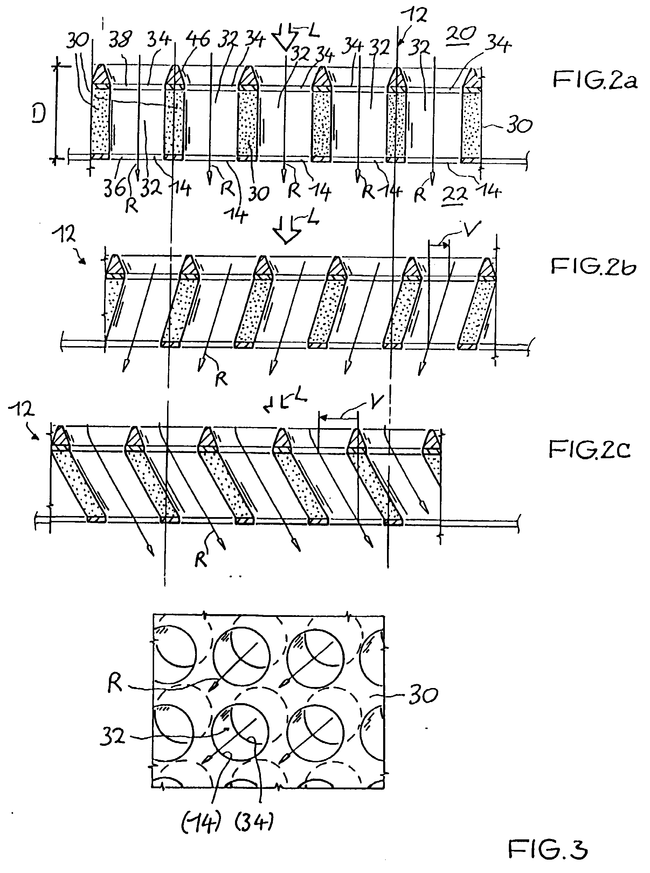

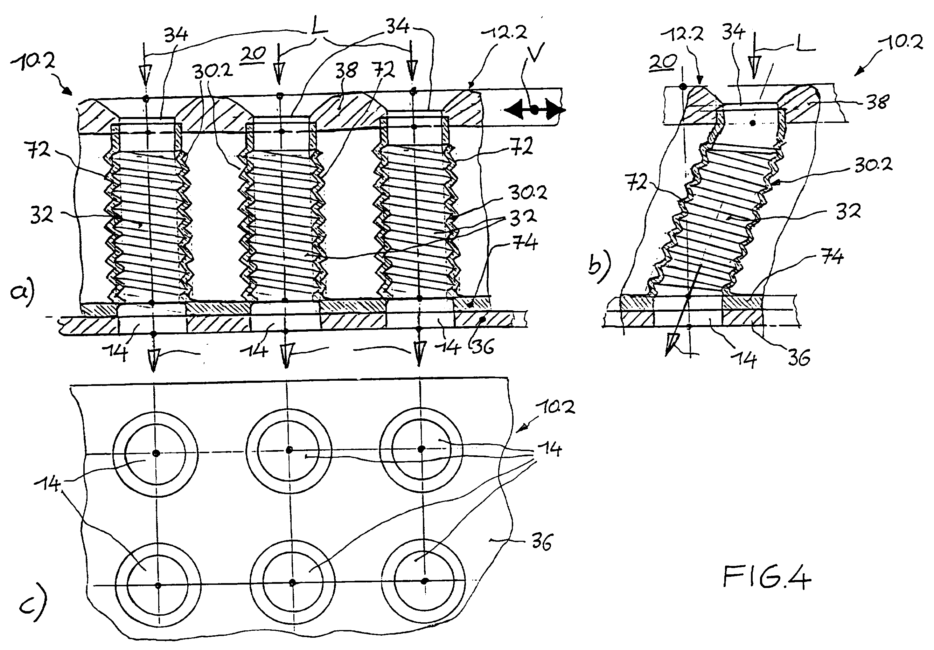

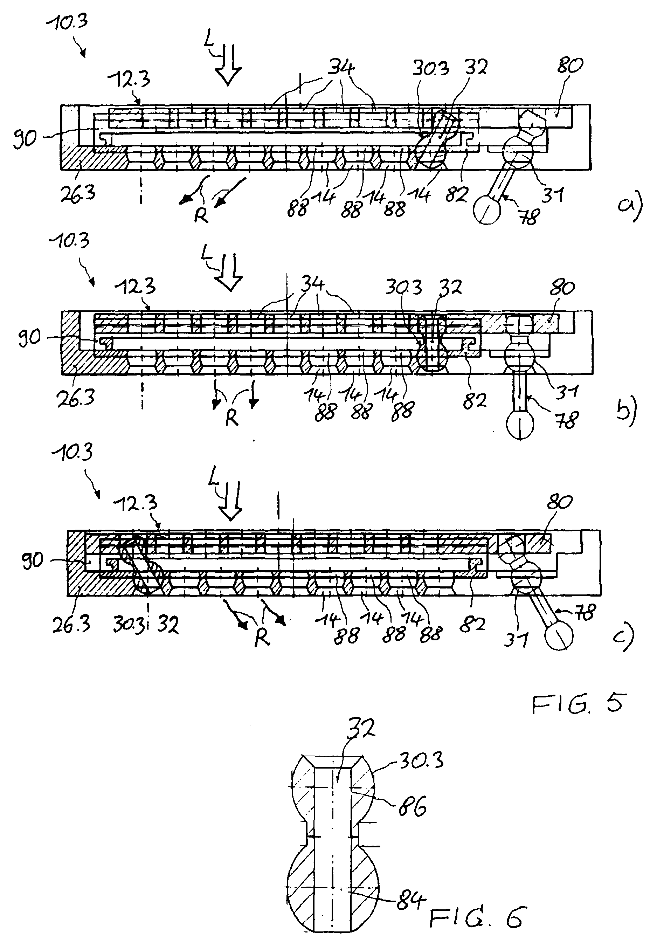

In den Figuren 2a bis 2c sind unterschiedliche Stellungen der Verschiebeplatte 38 dargestellt, wobei gemäß einem bevorzugten Ausführungsbeispiel die Dicke D der Luftleiteinrichtung 12 ca. 10 mm beträgt und der Verschiebeweg V, innerhalb dessen die Verschiebeplatte 38 in ihrer Ebene in jeder Richtung verschoben werden kann, beispielsweise +/- 4 mm beträgt. Deutlich ist zu erkennen, dass infolge der Verschiebung der Verschiebeplatte 38 gegenüber der feststehenden Lochblende 36 eine Schiefstellung der durchgehenden Ausnehmungen auftritt, wodurch die Richtung R der Luftströmung bestimmt wird.

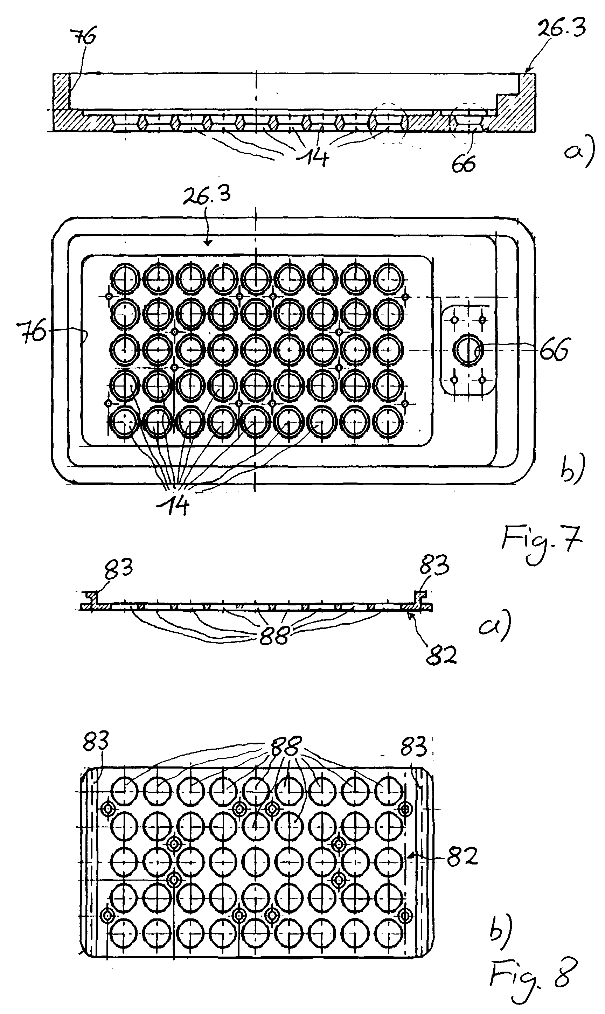

Eine zweite Ausführungsvariante einer erfindungsgemäßen Luftleitvorrichtung 10.2 ist in den Figuren 4a bis 4c dargestellt. Gleiche oder gleichwirkende Bauteile tragen dasselbe Bezugszeichen wie oben beschrieben und sind nicht nochmals erläutert. Die Luftleiteinrichtung 12.2 besitzt einen Luftleitkörper 30.2, der aus rastermäßig entsprechend den Ausnehmungen 14 beziehungsweise 34 vorhandenen Faltenbälgen 72 besteht, die an eine Platteneinheit 74 angeformt sind. Die Platteneinheit 74 ist mit der Lochblende 36 verklebt. Entsprechend ist auch die Verbindung des anderen Endes der Faltenbälge 72 mit der Verschiebeplatte 38 durch Klebung hergestellt. Aufgrund der elastischen Nachgiebigkeit der Faltenbälge 72 kann die beim Verschiebevorgang V auftretende vertikale Verschiebekomponente problemlos ausgeglichen werden. Hinsichtlich eines einfachen und wirtschaftlichen Herstellvorgangs ist es besonders vorteilhaft, die Kontur der Faltenbälge 72 gewindemäßig auszubilden, so dass beim spritzgussmäßigen Herstellen zunächst der Formkern im Inneren der Faltenbälge herausgedreht werden und danach eine Zwangsverformung von außen erfolgen kann.

Diese dargestellte Ausführungsvariante stellt sich als kostengünstige Alternative bei der Ausbildung als Spritzteil dar.

Ein drittes Ausführungsbeispiel einer erfindungsgemäßen Luftleitvorrichtung 10.3 ist in den Figuren 5 bis 10 dargestellt.

Die Luftleitvorrichtung 10.3 mit Luftleiteinrichtung 12.3 besitzt eine flache rechtecktörmige Quaderaußenkontur. Sie ist von außen nach innen aufgebaut aus einem Gehäuseteil 26.3 mit einer U-förmigen Innenausnehmung 76, die eine Rechteckkontur aufweist und in die eine Halteplatte 82 fixierbar eingelegt ist. Das Gehäuse 26.3 ist in den Figuren 7a und b schematisch dargestellt. Im Bereich der vorderen Bodenseite der Ausnehmung 76 sind rasterförmige, im Querschnitt kreisförmige und durchgehende Ausnehmungen 14 vorhanden, die sich von ihrer Mittellinie aus gesehen nach oben beziehungsweise nach unten leicht aufweiten. In die Ausnehmungen 14 können von oben her Röhrchen 30.3 eingesetzt werden, die eine durchgehende Ausnehmung 32 aufweisen. In ihrem unteren Außenkonturbereich weisen die Röhrchen 30.3 eine teilkugelförmige Außenkontur 84 auf. Ebenso weisen die Röhrchen 30.3 in ihrem oberen Außenkonturbereich eine teilkugelförmige Außenkontur 86 auf. Der Durchmesser der Ausnehmung 14 ist so gestaltet, dass die Röhrchen 30.3 durch die Ausnehmung 14 nicht hindurch fallen. Der obere Bereich der Ausnehmungen 14 bildet eine Art Lagerschale für die Röhrchen 30.3.

Nachdem die Röhrchen 30.3 eingesetzt sind, wird von oben eine Halteplatte 82 in die Ausnehmung 76 des Gehäuses 26.3 eingesetzt, die wiederum ebenfalls entsprechend rasterförmig angeordnete Ausnehmungen 88 aufweist, wobei der Durchmesser der Ausnehmung 88 so gestaltet ist, dass er zusammen mit dem oberen Bereich der Ausnehmung 14 des Gehäuses 26.3 eine Kugellagerung für die Röhrchen 30.3 bildet und gleichzeitig die Röhrchen gegen Vertikal- und Horizontalverschiebung gesichert sind. In diesem eingesetzten Zustand sind die Röhrchen 30.3 kugelförmig nach allen Richtungen drehbar vorhanden.

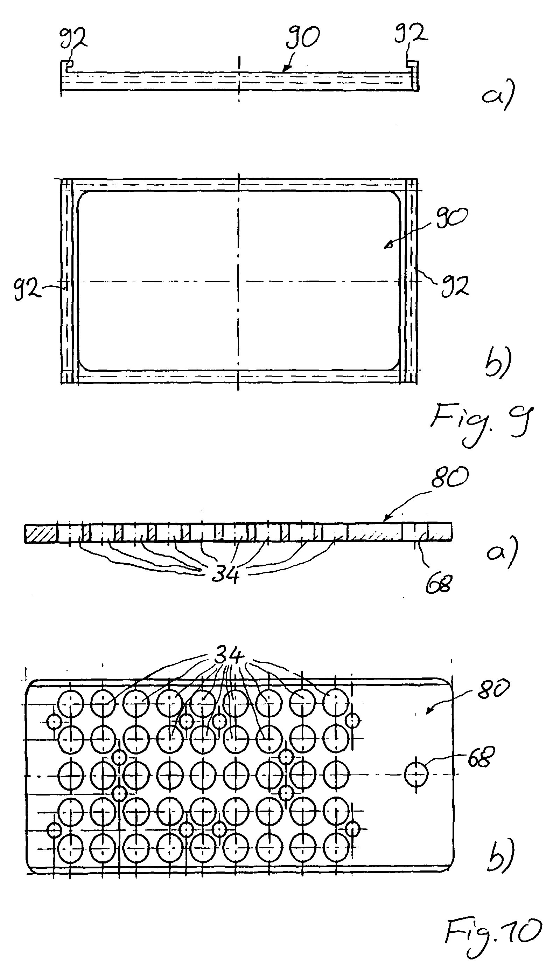

Rückseitig ist am Gehäuse 26.3 eine Verschiebeplatte 80 mit entsprechend ebenfalls rasterförmig vorhandenen durchgehenden Ausnehmungen 34 vorhanden. Diese Verschiebeplatte 80 ist in einem Führungsschlitten 90 verschiebbar gelagert und zwar im dargestellten Ausführungsbeispiel in Richtung V gemäß Figur 10b. Der Führungsschlitten 90 ist am Gehäuse 26.3 gelagert.

Der Führungsschlitten 90 weist an seinen beiden Stirnlängsrändern jeweils ein linienförmiges Hakenelement 92 auf, das im eingesetzten Zustand nach unten weist und mit einem ebenfalls linienförmig vorhandenen nach oben weisenden Hakenelement 83 der Halteplatte 82 formschlüssig in Verbindung steht. Im eingesetzten Zustand der Verschiebeplatte 80 greift der obere Außenkonturbereich 86 der Röhrchen 30.3 in die Ausnehmung 34 der Verschiebeplatte 80 ein. Die Gesamtheim der Röhrchen 30.3 bildet praktisch die Luftleiteinrichtung 12.3.

Im Gehäuse 26.3 ist gemäß Figur 7b rechts von den rasterförmig angeordneten Ausnehmungen 14 eine Einzelausnehmung 66 vorhanden, die bei zusammengesetzter Luftleitvorrichtung 10.3 mit einer entsprechend vorhandenen Einzelausnehmung 68 in der Verschiebeplatte 80 korrespondiert. Dem Grunde nach ist in beide Ausnehmungen 66 beziehungsweise 68 ebenfalls ein Röhrchenelement 30.3 eingesetzt, jedoch ist dieses nach außen hin an ein Hebelelement 78 angeschlossen.

Die in den Figuren mit den Bezugszeichen 14 beziehungsweise 88 beziehungsweise 34 versehenen Ausnehmungen stellen zusammen mit den Ausnehmungen 32 der Röhrchen 30.3 die durchgehenden Kanäle der Luftleiteinrichtung 12.3 dar.

In den Figuren 5a, b und c sind verschiedene Verschiebungszustände der Verschiebeplatte 80 schematisch im Schnitt dargestellt. Aus Übersichtlichkeitsgründen wurde jeweils nur ein Röhrchen 30.3 zeichnerisch dargestellt.

Der Hebel 78 mit seinem angeschlossenen Röhrchen 31 bewirkt die Verschiebung der Verschiebeplatte 80 und damit die Veränderung der Richtung der einströmenden Luft. Das Röhrchen 31 ist in der Ausnehmung 66 des Gehäuses 26.3 kugelförmig frei drehbar gelagert. Der obere Endbereich des Röhrchens 31 greift in die an der Verschiebeplatte vorhandene Einzelausnehmung 68 ein.

Es sind auch andere Konstruktionen zum Einstellen der Position der Verschiebeplatte denkbar, die nicht zwingend den dargestellten Ausführungsbeispielen entsprechen müssen.

Das in den Figuren 5 bis 10 dargestellte Beispiel ist in Aluminium ausgebildet. Insbesondere hinsichtlich einer wirtschaftlichen Herstellung ist es sinnvoll, die Vorrichtung 10.3 aus Kunststoffspritzteilen herzustellen. Hierbei verringert sich die Anzahl der einzelnen Bauteile; insbesondere das Bauteil 26.3 und das Bauteil 82 können hierbei als einstückiges Bauteil hergestellt werden.

## Patentansprüche

1. Luftleitvorrichtung (10.1; 10.2; 10.3) zum richtungsmäßig definierten Einleiten (R) von auf der Rückseite (20) der Vorrichtung zugeführter Luft (L) in einen Raum (22), insbesondere Innenraum eines Fahrzeugs, mit
- einem Gehäuse (26),
- einer vorderseitig Ausnehmungen (14) aufweisenden Luftleiteinrichtung (12.1; 12.2; 12.3), mittels derer die Richtung (R) der in den Raum (22) ausströmenden Luft festlegbar ist,
- Mitteln (16) zum Einstellen der Richtung (R) der Luftleiteinrichtung (12.1; 12.2) und
- Mitteln (18) zum Einstellen der Menge der in den Raum (22) strömenden Luft,
**dadurch gekennzeichnet,** dass
- ein Luftleitkörper (30.1; 30.2; 30.3) oder eine Luftleitplatte vorhanden ist, der/die durchgehende Ausnehmungen (32) aufweist, die mit den vorderseitigen Ausnehmungen (14) und der luftbeaufschlagten Rückseite (20) korrespondieren,
- der Luftleitkörper (30.1; 30.2; 30.3) oder die Luftleitplatte aus elastisch verformbarem Material besteht,
- Mittel (40) zum Verschieben der Rückseite des/der Luftleitkörpers (30.1; 30.2; 30.3)/Luftleitplatte gegenüber der fixierten Vorderseite des/der Luftleitkörpers (30.1; 30.2; 30.3)/Luftleitplatte vorhanden sind oder umgekehrt und
- die Mittel (40; 31) zum Verschieben von den Mitteln (16; 78) zum Einstellen der Richtung beaufschlagt werden, so dass sich eine gewünschte Stellung der durchgehenden Ausnehmungen (32) und damit die gewünschte Einströmrichtung (R) einstellt.

2. Luftleitvorrichtung nach Anspruch 1,
**dadurch gekennzeichnet,** dass
- die Luftleiteinrichtung (12.1; 12.2) als Sandwich-Einrichtung ausgebildet ist mit
- einer vorderseitig angeordneten Lochblende (36) mit Ausnehmungen (14),
- einer rückseitig angeordneten Verschiebeplatte (38) mit Ausnehmungen (34), wobei
- der Luftleitkörper (30.1; 30.2) oder die Luftleitplatte zwischen Lochblende (36) und Verschiebeplatte (38) angeordnet und mit der Lochblende (36) und der Verschiebeplatte (38) verbunden ist, derart, dass die Ausnehmungen (14, 34) mit den durchgehenden Ausnehmungen (32) korrespondieren, und
- die Mittel (40) zum Verschieben auf die Verschiebeplatte (38) einwirken.

3. Luftleitvorrichtung nach Anspruch 2,
**dadurch gekennzeichnet,** dass
- die Verschiebeplatte (38) in Führungen gelagert ist, so dass sie in ihrer Ebene definierbar verschieblich ist.

4. Luftleitvorrichtung nach Anspruch 2,
**dadurch gekennzeichnet,** dass
- die Lochblende (36) aus Aluminium besteht.

5. Luftleitvorrichtung nach Anspruch 2,
**dadurch gekennzeichnet,** dass
- die Lochblende aus Kunststoff besteht und/oder die Verschiebeplatte (38) als Kunststoffplatte, insbesondere als gespritzte Kunststoffplatte, ausgebildet ist.

6. Luftleitvorrichtung nach Anspruch 2,
**dadurch gekennzeichnet,** dass
- die Verbindung der Lochblende (36) mit dem Luftleitkörper (30.1; 30.2)/der Luftleitplatte und/oder die Verbindung der Verschiebeplatte (38) mit dem Luftleitkörper (30.1; 30.2)/der Luftleitplatte geklebt ausgebildet ist.

7. Luftleitvorrichtung nach einem oder mehreren der Ansprüche 2 bis 6,
**dadurch gekennzeichnet,** dass
- die vorderen Ausnehmungen (14), die durchgehenden Ausnehmungen (32) und die rückseitigen Ausnehmungen (34) eine kreisrunde Innenkontur, insbesondere mit einem Durchmesser von 2 mm (Millimeter) bis 5 mm, insbesondere von ca.3 mm aufweisen.

8. Luftleitvorrichtung nach einem oder mehreren der Ansprüche 1 bis 6,
**dadurch gekennzeichnet,** dass
- die vorderen Ausnehmungen, die durchgehenden Ausnehmungen und/oder die rückseitigen Ausnehmungen eine polygonale Innenumfangskontur aufweisen.

9. Luftleitvorrichtung nach einem oder mehreren der vorstehenden Ansprüche,
**dadurch gekennzeichnet,** dass
- die Dicke des Luftleiteinrichtung (12.1; 12.2) im Bereich von ca. 10 mm (Millimeter) bis 20 mm liegt.

10. Luftleitvorrichtung nach einem oder mehreren der Ansprüche 2 bis 9,
**dadurch gekennzeichnet,** dass
- der durch die Mittel (40) zum Verschieben bewirkbare Verschiebeweg der Verschiebeplatte (38) im Bereich zwischen +/- 3 mm (Millimeter) bis +/- 10 mm, insbesondere bei 4 mm in allen Richtungen der Ebene der Verschiebeplatte (38) liegt.

11. Luftleitvorrichtung nach einem oder mehreren der Ansprüche 2 bis 10,
**dadurch gekennzeichnet,** dass
- die Dicke der Verschiebeplatte (38) im Bereich von 1 bis 2 mm (Millimeter) liegt.

12. Luftleitvorrichtung nach einem oder mehreren der vorstehenden Ansprüche,
**dadurch gekennzeichnet,** dass
- der Luftleitkörper (30.1; 30.2)/die Luftleitplatte aus Zellgummi, Schaumstoff, thermoplastischen Elastomeren (TPE) oder Silikon besteht.

13. Luftleitvorrichtung nach einem oder mehreren der Ansprüche 1 bis 12,
**dadurch gekennzeichnet,** dass
- der Luftleitkörper (30) aus rasterfärmig angeordneten elastisch biegbaren Kragelementen besteht.

14. Luftleitvorrichtung nach einem oder mehreren der vorstehenden Ansprüche,
**dadurch gekennzeichnet,** dass
- die Mittel (40) zum Verschieben ein elektrisches, pneumatisches oder hydraulisches Aggregat, insbesondere einen Elektromotor, aufweisen.

15. Luftleitvorrichtung nach Anspruch 14,
**dadurch gekennzeichnet,** dass
- die Mittel (40) zum Verschieben elektrisch über Drucktasten, Wippschalter oder dergleichen angesteuert werden.

16. Luftleitvorrichtung nach Anspruch 13,
**dadurch gekennzeichnet,** dass
- die Mittel (40) zum Verschieben elektronisch über ein druckempfindliches Bedienfeld (42), d.h. ein sogenanntes Touchscreen, oder dergleichen positionsauswertendes elektronisches System angesteuert werden.

17. Luftleitvorrichtung nach Anspruch 16,
**dadurch gekennzeichnet,** dass
- das Bedienfeld (42) mit Leuchtdioden (44) hinterlegt ist, die die jeweilige druckbeaufschlagte Position anzeigen.

18. Luftleitvorrichtung nach einem oder mehreren der Ansprüche 14 bis 17,
**dadurch gekennzeichnet,** dass
- Mittel zum Speichern und Abrufen von voreingestellten beziehungsweise voreinstellbaren Positionen der Verschiebeplatte (38) und damit der Einströmrichtung (R) vorhanden sind.

19. Luftleitvorrichtung nach einem oder mehreren der Ansprüche 1 bis 13,
**dadurch gekennzeichnet,** dass
- die Mittel zum Einstellen der Richtung der Luftzuführung und die Mittel zum Verschieben als mechanisch betätigbare Mittel ausgebildet sind.

20. Luftleitvorrichtung nach Anspruch 19,
**dadurch gekennzeichnet,** dass
- die Mittel zum Einstellen beziehungsweise die Mittel zum Verschieben einen sogenannten Joy-Stick oder einen sogenannten Track-Ball oder einen Drehregler oder dergleichen mechanisch betätigbares Einstellelement aufweisen.

21. Luftleitvorrichtung nach Anspruch 2, 3, 5 oder 11,
**dadurch gekennzeichnet,** dass
- die Verschiebeplatte (38) rückseitig Rippen (46) aufweist.

22. Luftleitvorrichtung nach einem oder mehreren der vorstehenden Ansprüche,
**dadurch gekennzeichnet,** dass
- die Ausnehmungen (34) des Luftkeitkörpers (30.2) durch rasterförmig angeordnete Schlaucheinheiten (72) gebildet werden.

23. Luftleitvorrichtung nach Anspruch 22,
**dadurch gekennzeichnet,** dass
- die Schlaucheinheiten (72) als Faltenbalg (72) ausgebildet sind.

24. Luftleitvorrichtung nach Anspruch 23,
**dadurch gekennzeichnet,** dass
- der Faltenbalg eine gewindeartige Kontur aufweist.

25. Luftleitvorrichtung nach einem oder mehreren der Ansprüche 22 bis 24,
**dadurch gekennzeichnet,** dass
- die Schlaucheinheiten (72)/Faltenbälge einstückig mit einer Platteneinheit (74) mit Plattenausnehmungen (76), die den Ausnehmungen (32) zugeordnetet sind, verbunden sind.

26. Luftleitvorrichtung nach einem oder mehreren der Ansprüche 22 bis 25,
**dadurch gekennzeichnet,** dass
- die Schlaucheinheiten (72)/Faltenbälge und/oder die Platteneinheit (74) mit der Lochblende (36) und/oder verschiebeplatte (38) verklebt sind.

27. Luftleitvorrichtung (10.3) nach einem oder mehreren der Ansprüche 1 bis 12,
**dadurch gekennzeichnet,** dass
der Luftleitkörper (30.3) durch rasterförmig angeordnete, insbesondere mehr oder minder starre Röhrchen gebildet wird, die frei rotierbar an der Verschiebeplatte (80) und an dem Gehäuse (26) und/oder einer Halteplatte (82) gelagert sind.

28. Luftleitvorrichtung nach Anspruch 27,
**dadurch gekennzeichnet,** dass
zumindest ein Endbereich der Röhrchen (30.3) jeweils eine teilkugelförmige Außenkontur (84.1; 84.2) aufweist und diese Kontur in der Halteplatte (82) und/oder dem Gehäuse (26) nach allen Richtungen drehbar gelagert ist.

29. Luftleitvorrichtung nach Anspruch 19, 27 oder 28,
**dadurch gekennzeichnet,** dass
die Mittel zum Einstellen der Richtung der Lüftungsströmung als am Gehäuse (26) oder der Halteplatte (82) kugelgelagerter Hebel (78) ausgebildet ist, der an die Verschiebeplatte (80) angelenkt ist.

30. Luftleitvorrichtung nach einem oder mehreren der vorstehenden Ansprüche,
**dadurch gekennzeichnet,** dass
die Verschiebeplatte (80) an einem Führungsschlitten (90) verschiebbar gelagert ist.
